# EUROPÄISCHE PATENTANMELDUNG

(11) **EP 3 798 456 A1**
(43) Veröffentlichungstag der Anmeldung: **31.03.2021**
(21) Anmeldenummer: 19200173.3
(22) Anmeldetag: 27.09.2019
(51) Int. Cl.: F16C 17/10, B23K 26/352, B24C 1/00

(54) **GLEITLAGER**

(71) Anmelder: Flender GmbH, 46395 Bocholt (DE)
(72) Erfinder: Meyer, Thomas, 52223 Stolberg (DE)
(74) Vertreter: Maier, Daniel Oliver

(57) **Zusammenfassung**

Gleitlager (1) mit mindestens einer Gleitfläche (3), die eine Oberflächenrauheit aufweist, dadurch gekennzeichnet, dass die Gleitfläche (3) mit einer aus Vertiefungen (7) gebildeten Struktur versehen ist, wobei die Tiefe (t) der Vertiefungen (7) größer als die Oberflächenrauheit und kleiner als 80pm ist und insbesondere im Bereich zwischen 20-50pm liegt. Ferner betrifft die Erfindung ein Verfahren zur Herstellung eines solchen Gleitlagers (1). Zudem betrifft die Erfindung ein Getriebe (10) mit zumindest einem solchen Gleitlager (1), einen Antriebsstrang (18) mit einem solchen Getriebe (10), eine Windkraftanlage (14) mit einem solchen Antriebsstrang (18) sowie eine Industrie-Applikation (20) mit einem solchen Getriebe (10).

## Beschreibung

Die Erfindung betrifft ein Gleitlager mit mindestens einer Gleitfläche, die eine Oberflächenrauheit aufweist. Ferner betrifft die Erfindung ein Verfahren zur Herstellung eines solchen Gleitlagers. Zudem betrifft die Erfindung ein Getriebe mit zumindest einem solchen Gleitlager, einen Antriebsstrang mit einem solchen Getriebe, eine Windkraftanlage mit einem solchen Antriebsstrang sowie eine Industrie-Applikation mit einem solchen Getriebe.

Gleitlager werden in Getrieben für Windkraftanlagen stark beansprucht. Ein unerwünschter Mischreibungsbetrieb ist nicht auszuschließen, insbesondere im Fall von dynamischen Spitzenlasten oder bei der Einzelblattmontage. Hierbei treten sehr hohe Kontaktdrücke bei sehr geringen Gleitgeschwindigkeiten auf. Vor diesem Hintergrund muss davon ausgegangen werden, dass keine hydrodynamische Tragfähigkeit vorhanden ist. Lediglich die sogenannte Mikro-Hydrodynamik innerhalb der Oberflächenrauheiten der Gleitflächen der Gleitlager kann zur Schmierung beitragen. Diese Mikro-Hydrodynamik ist jedoch stark eingeschränkt, da während des Einlaufens eines Gleitlagers eine Glättung der Oberflächenrauheit der Gleitlagergleitflächen stattfindet, weshalb beispielsweise bei der nachfolgenden Einzelblattmontage die Mirko-Hydrodynamik vernachlässigbar ist.

Zur Behebung dieser Problematik ist es bekannt, die Gleitflächen von Gleitlagern mit einer Einlauf- bzw. Notlaufbeschichtung zu versehen. Derartige Gleitlager werden auch als Mehrschicht-Gleitlager bezeichnet. Der Aufwand zur Herstellung eines solchen Mehrschicht-Gleitlagers ist allerdings sehr aufwendig und teuer.

Ausgehend von diesem Stand der Technik ist es eine Aufgabe der vorliegenden Erfindung, ein Gleitlager mit alternativem Aufbau zu schaffen, das die zuvor beschriebene Problematik ganz oder zumindest teilweise beseitigt.

Zur Lösung dieser Aufgabe schafft die vorliegende Erfindung ein Gleitlager der eingangs genannten Art, bei dem die Gleitfläche mit einer aus Vertiefungen gebildeten Struktur versehen ist, wobei die Tiefe der Vertiefungen größer als die Oberflächenrauheit und kleiner als 80pm ist und insbesondere im Bereich zwischen 20-50µm liegt. Die zusätzlich zur der Gleitfläche eigenen Oberflächenrauheit vorgesehene, aus Vertiefungen gebildete Struktur fördert die Mikro-Hydrodynamik der entsprechenden Gleitfläche, da der zuvor beschriebene Glättungseffekt durch die Vertiefungen kompensiert wird, deren Tiefe größer als die Oberflächenrauheit der Gleitfläche ist, weshalb sie nicht oder nur geringfügig geglättet werden und somit auch nach dem Einlaufen noch vorhanden sind.

Die Vertiefungen sind auf der Gleitfläche bevorzugt gleichmäßig verteilt angeordnet, um der gesamten Gleitfläche eine möglichst einheitliche Mikro-Hydrodynamik zu verleihen.

Gemäß einer Ausgestaltung der vorliegenden Erfindung können Vertiefungen rillenförmig ausgebildet sind, wobei sich rillenförmig ausgebildete Vertiefungen vorteilhaft quer zur Gleitrichtung erstrecken, was eine besonders gute Wirkung nach sich zieht.

Alternativ oder zusätzlich können Vertiefungen napf- und/oder muldenförmig ausgebildet sein.

Bevorzugt weisen napf- und/oder muldenförmig ausgebildete Vertiefungen im Wesentlichen die Form eines Quaders auf, beispielsweise mit Abmessungen von 20x20x20µm bis 50x50x50µm. "Im Wesentlichen" bedeutet in diesem Zusammenhang, dass die Ecken der Quaderform abgerundet sein können. Ebenso können die Seitenflächen eine Neigung aufweisen.

Gemäß einer Ausgestaltung der vorliegenden Erfindung ist die Ausrichtung napf- und/oder muldenförmig ausgebildete Vertiefungen uneinheitlich. Napf- und/oder muldenförmige Vertiefungen mit uneinheitlicher Ausrichtung lassen sich einfach und preiswert fertigen, beispielsweise mittels Kugelstrahlen, so dass teure Rollierwerkzeuge mit Prägestempeln entfallen.

Die napf- und/oder muldenförmig ausgebildeten Vertiefungen weisen bevorzugt einen Außenumfang im Bereich von 70-300µm auf. Derartige Abmessungen haben sich als sehr effektiv erwiesen.

Vorteilhaft weisen die Vertiefungen einen Flächenanteil von 3-50% der gesamten Gleitfläche auf, insbesondere einen Flächenanteil von 30-50%. Bei einem solchen Flächenanteil ist eine wirkungsvolle Mikro-Hydrodynamik gewährleistet.

Zur Lösung der eingangs genannten Aufgabe schafft die vorliegende Erfindung ferner ein Verfahren zur Herstellung eines erfindungsgemäßen Gleitlagers, bei dem die Vertiefungen mittels Wälzprägen, Laserbearbeitung, Sandstrahlen, Kugelstrahlen und/oder Erodieren gefertigt werden. Mit diesen Fertigungsverfahren lassen sich die Vertiefungen mit geringem Aufwand und kostengünstig in die zumindest eine Gleitfläche eines Gleitlagers einbringen.

Ferner schafft die vorliegende Erfindung ein Getriebe mit zumindest einem erfindungsgemäßen Gleitlager, insbesondere in Form eines Planetengetriebes, bei dem beispielsweise die Planetenradräder unter Einsatz erfindungsgemäßer Gleitlager an ihrer zugehörigen Planetenradachse und/oder am zugehörigen Planetenträger gelagert sind.

Zudem schlägt die vorliegende Erfindung vor einen Antriebsstrang, umfassend eine Rotorwelle, die drehmomentübertragend mit einem Getriebe verbunden ist, das wiederrum drehmomentübertragend mit einem Generator verbunden ist, wobei das Getriebe erfindungsgemäß ausgebildet ist.

Darüber hinaus schafft die vorliegende Erfindung eine Windkraftanlage, umfassend einen Rotor, der an einer Gondel angebracht ist, wobei an der Gondel ein Antriebsstrang angeordnet ist, der drehmomentübertragend mit dem Rotor verbunden ist, wobei der Antriebsstrang erfindungsgemäß ausgebildet ist. Dabei ist insbesondere eine Rotierwelle des Antriebsstrangs mit dem zumindest einen Gleitlager gelagert ist.

Des Weiteren schafft die vorliegende Erfindung eine Industrie-Applikation, umfassend ein Antriebsmittel, das mit einem Getriebe drehmomentübertragend verbunden ist, das mit einer mechanischen Anwendung drehmomentübertragend gekoppelt ist, wobei das Getriebe erfindungsgemäß ausgebildet ist.

Hinsichtlich weiterer vorteilhafter Ausgestaltungen der Erfindung wird auf die Unteransprüche sowie auf die nachfolgende Beschreibung unter Bezugnahme auf die Zeichnung verwiesen. In der Zeichnung zeigt
- FIG 1: eine schematische perspektivische Ansicht eines radial wirkenden Gleitlagers bzw. Radialgleitlagers gemäß einer Ausführungsform der vorliegenden Erfindung;
- FIG 2: eine vergrößerte Schnittansicht einer Vertiefung, die auf der Gleitfläche des in FIG 1 gezeigten Gleitlagers ausgebildet ist;
- FIG 3: eine schematische Seitenansicht eines axial wirkenden Gleitlagers bzw. Axialgleitlagers gemäß einer Ausfüh-rungsform der vorliegenden Erfindung;
- FIG 4: eine vergrößerte Schnittansicht einer Vertiefung, die auf der Gleitfläche des in FIG 3 gezeigten Gleitlagers ausgebildet ist;
- FIG 5: eine Schnittansicht eines Teilbereiches einer Ausführungsform eines erfindungsgemäßen Getriebes;
- FIG 6: eine schematische Schnittansicht einer Ausführungsform einer erfindungsgemäßen Windkraftanlage;
- FIG 7: eine schematische Darstellung einer Ausführungsform eines erfindungsgemäßen Antriebsstrangs und
- FIG 8: eine schematische Darstellung einer Ausführungsform einer erfindungsgemäßen Industrie-Applikation.

Gleiche Bezugsziffern bezeichnen nachfolgend gleiche oder gleichartige Bauteile bzw. Bauteilbereiche.

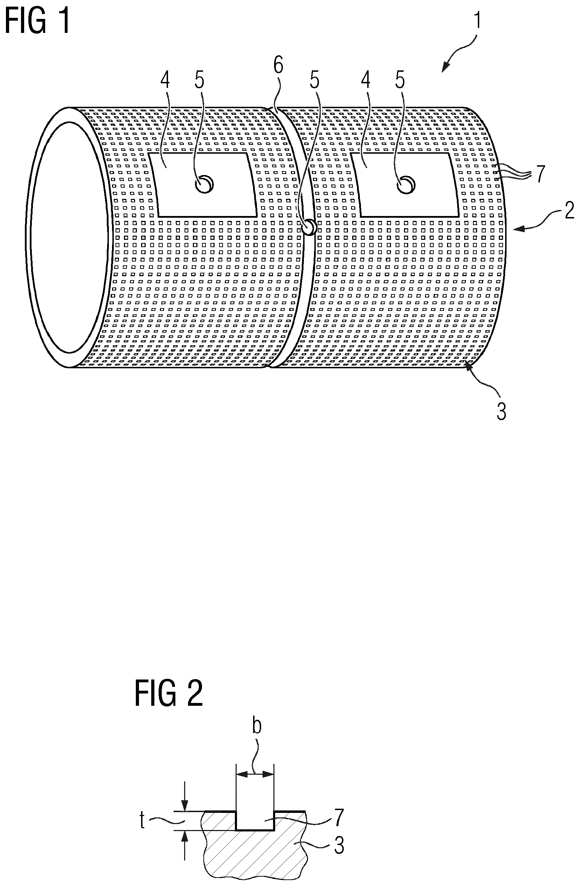

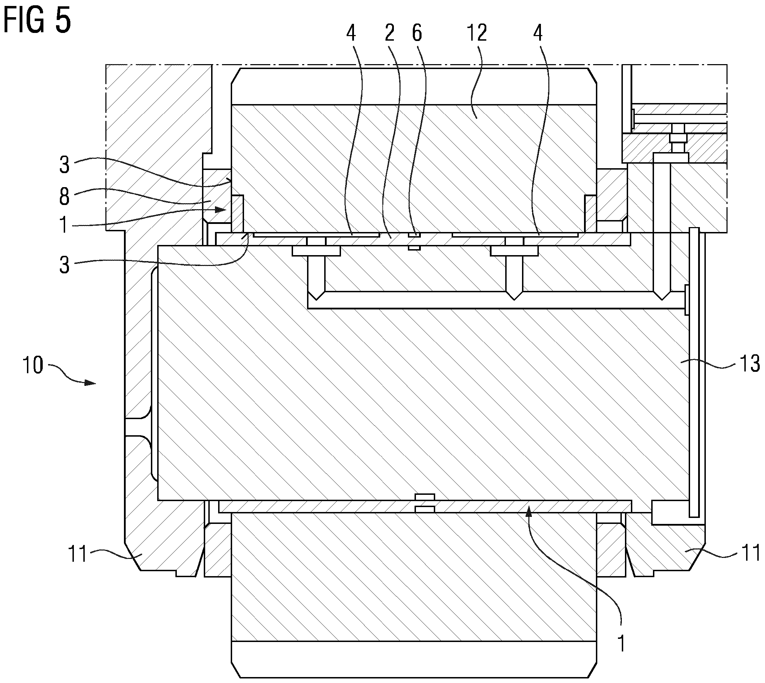

FIG 1 zeigt ein Gleitlager 1 gemäß einer Ausführungsform der vorliegenden Erfindung, bei dem es sich um ein Radialgleitlager handelt. Das Gleitlager 1 umfasst eine Hülse 2, die aus einem Gleitlagerwerkstoff hergestellt ist und vorliegend an ihrer Außenseite eine Gleitfläche 3 definiert. Die Gleitfläche 3 weist eine vorbestimmte Oberflächenrauheit auf, die im vorliegenden Fall 10µm beträgt. Die Innenseite der Hülse 2 dient als Montagefläche zur kraft-, form- oder stoffschlüssigen Befestigung der Hülse 2 an einem Bauteil, wie beispielsweise an einer Planetenradachse eines Getriebes, wie es nachfolgend unter Bezugnahme auf FIG 5 noch näher erläutert ist. Es sollte allerdings klar sein, dass die Gleitfläche 3 alternativ auch an der Innenseite und die Montagefläche an der Außenseite der Hülse 2 vorgesehen sein kann. An der Gleitfläche 3 sind vorliegend zwei Schmierstoffsammelaussparungen 4 ausgebildet, die im montierten Zustand des Gleitlagers 1 über eine Bohrung 5 mit einem Schmierstoffzuführsystem verbunden sind. Ferner erstreckt sich zwischen den beiden Schmierstoffsammelaussparungen 4 eine Schmierstoffversorgungsnut 6, die im montierten Zustand des Gleitlagers 1 ebenfalls über eine Bohrung 5 mit einem Schmierstoffzuführsystem verbunden ist. Die Gleitfläche 3 ist zudem mit einer Struktur versehen, die vorliegend durch eine Vielzahl von Vertiefungen 7 gebildet ist. Die Tiefe t der jeweiligen Vertiefungen 7 ausgehend von der Außenseite der Gleitfläche 3 ist dabei größer als die Oberflächenrauheit der Gleitfläche 3 und kleiner als 80pm. Vorliegend weisen die Vertiefungen 7 eine im Wesentlichen quaderförmige Form mit Abmessungen von 40x40x40µm auf. FIG 2 zeigt eine Querschnittansicht einer solchen Vertiefung 7. Es sollte allerdings klar sein, dass auch andere Formen und Abmessungen gewählt werden können, wie napfförmige Vertiefungen 7 mit beispielsweise kreisrundem Querschnitt, rillenförmige Vertiefungen 7 oder dergleichen. Die Tiefe t sollte 80pm jedoch nicht überschreiten. Der Flächenanteil der Vertiefungen 7 an der gesamten Gleitfläche 3 liegt bevorzugt zwischen 3-50%, vorliegend bei 40%.

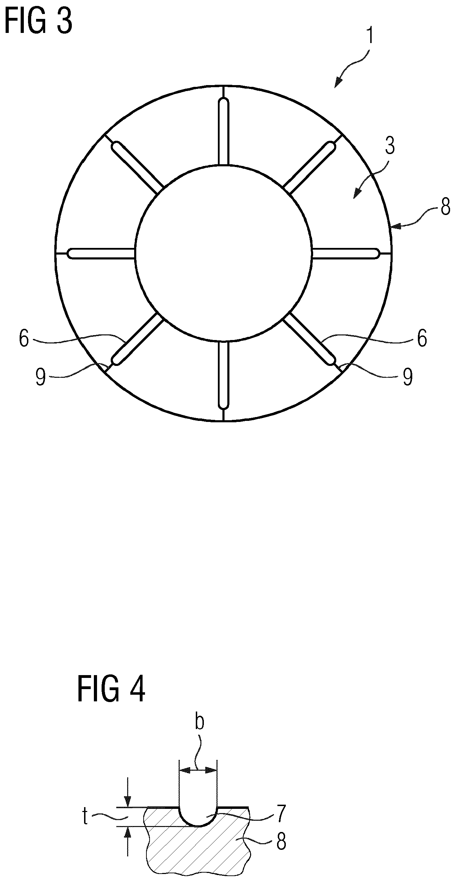

FIG 3 zeigt ein Gleitlager 1 gemäß einer weiteren Ausführungsform der vorliegenden Erfindung, bei dem es sich um ein Axialgleitlager handelt. Das Gleitlager 1 umfasst eine Ringscheibe 8, die aus einem Gleitlagerwerkstoff hergestellt ist und an einer Seite eine Gleitfläche 3 definiert. Die Gleitfläche 3 weist eine vorbestimmte Oberflächenrauheit auf, die vorliegend ebenfalls 10µm beträgt. Die gegenüberliegende Seite bildet eine Montagefläche zur kraft-, form- oder stoffschlüssigen Befestigung der Ringscheibe 8 an einem Bauteil, wie beispielsweise an einer Innenseite einer Planetenträgerwange eines Getriebes, wie es nachfolgend unter Bezugnahme auf FIG 5 noch näher erläutert ist. An der Gleitfläche 3 ist vorliegend eine Mehrzahl von sich sternförmig in radialer Richtung erstreckenden Schmierstoffsammelnuten 4 vorgesehen, die vorliegend am radial einwärts gelegenen Ende offen sind. Am radial auswärts gelegenen Ende werden die Schmierstoffsammelnuten 4 durch schmalere Schmutznuten 9 fortgesetzt die bis zum Außenrand der Ringscheibe 8 geführt sind. Die Gleitfläche 3 ist analog zur ersten Ausführungsform mit einer Struktur versehen, die vorliegend durch eine Vielzahl von Vertiefungen 7 gebildet ist. Die Tiefe t der jeweiligen Vertiefungen 7 ausgehend von der Außenseite der Gleitfläche 3 ist dabei größer als die Oberflächenrauheit der Gleitfläche 3 und kleiner als 80pm. Vorliegend sind die Vertiefungen 7 rillenförmig ausgebildet und weisen einen U-förmigen Querschnitt auf. Die Breite b und Tiefe h betragen jeweils 50pm. Eine Querschnittansicht einer Vertiefung 7 zeigt FIG 4. Es sollte allerdings klar sein, dass auch hier für die Vertiefungen 7 andere Formen und Abmessungen gewählt werden können. Die Tiefe t sollte 80µm jedoch nicht überschreiten. Der Flächenanteil der Vertiefungen 7 an der gesamten Gleitfläche 3 liegt bevorzugt zwischen 3-50%, vorliegend bei 30%.

Ein wesentlicher Vorteil der in den Figuren 1 und 3 dargestellten Gleitlager 1 besteht darin, dass die zusätzlich zur der Gleitfläche 3 eigenen Oberflächenrauheit vorgesehene, aus Vertiefungen 7 gebildete Struktur die Mikro-Hydrodynamik der entsprechenden Gleitfläche 3 deutlich fördert, da ein beim Einlaufen des entsprechenden Gleitlagers 1 auftretender, die Oberflächenrauheit der Gleitfläche 3 minimierender Glättungseffekt durch die Vertiefungen 7 kompensiert wird, deren Tiefe t größer als die Oberflächenrauheit der Gleitfläche 3 ist, weshalb sie nicht oder nur geringfügig geglättet werden, somit auch nach dem Einlaufen noch vorhanden sind und zur Mikro-Hydrodynamik beitragen.

Die Vertiefungen 7 der in den Figuren 1 und 3 dargestellten Gleitlager 1 sind bevorzugt mittels Wälzprägen, Laserbearbeitung, Sandstrahlen, Kugelstrahlen und/oder Erodieren gefertigt, weshalb sich die Gleitlager 1 einfach und preiswert herstellen lassen.

FIG 5 zeigt einen Teilbereich eines Getriebes 10 gemäß einer Ausführungsform der vorliegenden Erfindung, bei dem es sich um ein Planetengetriebe handelt. Genauer gesagt zeigt FIG 5 ein an einem Planetenträger 11 drehbar gelagertes Planetenrad 12 mit zugehöriger Planetenradachse. 13. Die radiale Lagerung des Planetenrads 12 erfolgt unter Verwendung eines in FIG 1 gezeigten Gleitlagers 1, das mit seiner Innenseite der Hülse 2 an der Planetenradachse 13 befestigt ist. Für die axiale Lagerung werden zwei in FIG 3 dargestelltes Gleitlager 1 verwendet, die am Planetenträger 11 fixiert sind.

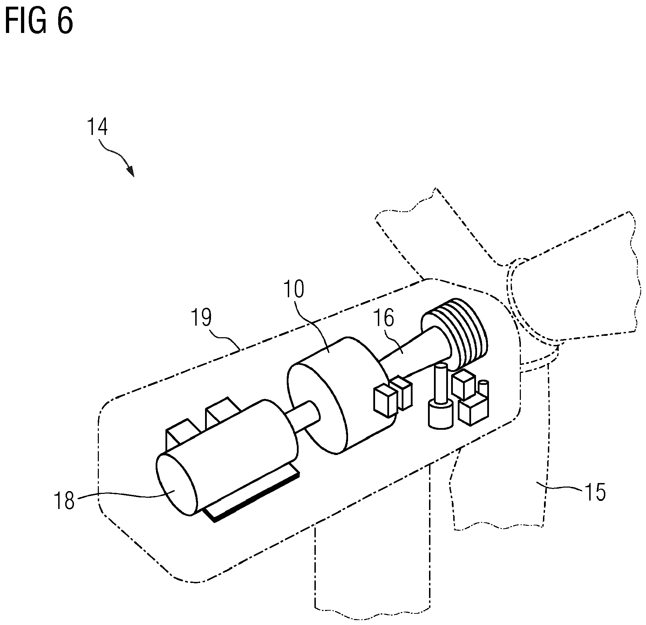

In FIG 6 ist eine Ausführungsform einer erfindungsgemäßen Windkraftanlage 14 dargestellt. Die Windkraftanlage 14 umfasst einen Rotor 15, der durch Wind in Drehung versetzbar ist. Der Rotor 15 ist über eine Rotorwelle 16 mit einem erfindungsgemäßen Getriebe 10 drehmomentübertragend verbunden. Das Getriebe 10 wiederrum ist drehmomentübertragend mit einem Generator 17 verbunden. Die Rotorwelle 16, das Getriebe 10 und der Generator 17 gehören zu einem Antriebsstrang 18, der in einer Gondel 19 der Windkraftanlage 14 aufgenommen ist. Der Generator 17 weist zwei, drei, oder vier Poolpaare auf.

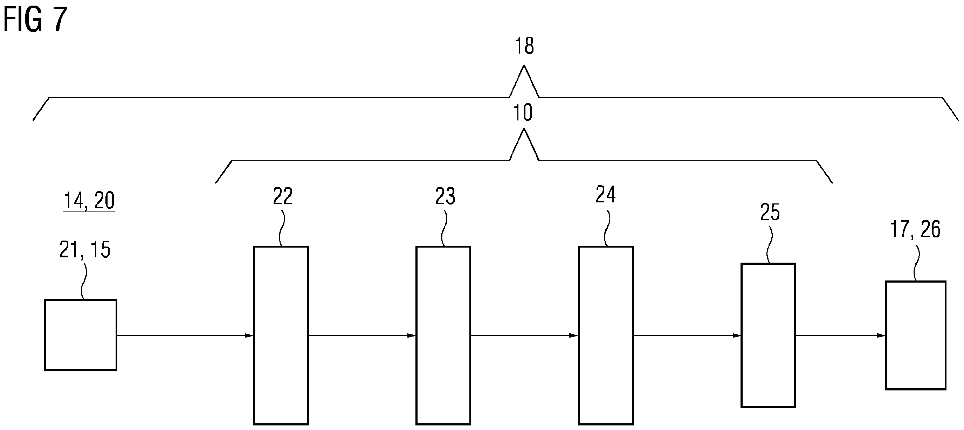

FIG 7 zeigt einen schematischen Aufbau einer Ausführungsform eines erfindungsgemäßen Antriebsstrangs 18, der in einer nicht näher dargestellten Windkraftanlage 14 oder in einer nicht näher dargestellten Industrie-Applikation 20 einsetzbar ist. Der Antriebsstrang 18 umfasst ein erfindungsgemäßes Getriebe 10, das eingangsseitig mit einem Antriebsmittel 21 oder einem Rotor 15 der Windkraftanlage 14 verbunden ist und dem so eine Antriebsleistung zugeführt wird. In einer Windkraftanlage 14 erfolgt dies mittels einer Rotorwelle 16. Das Getriebe 10 umfasst vorliegend Planetenstufen 22, 23 und 24 sowie eine Stirnradstufe 25, die hintereinander angeordnet sind. Die Getriebestufen 22, 23, 24 und 25 geben eine Abtriebsleistung an einen Generator 17 oder eine mechanische Anwendung 26 ab.

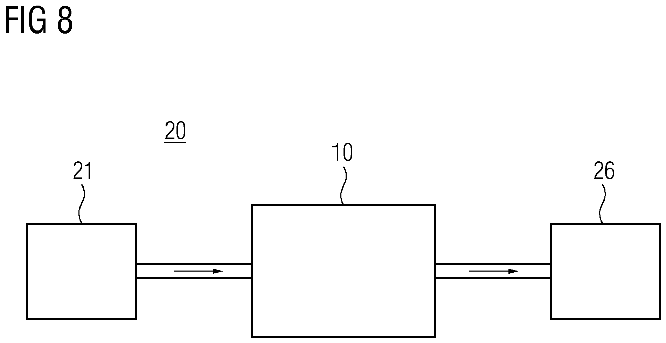

In FIG 8 ist schematisch der Aufbau einer Ausführungsform einer erfindungsgemäßen Industrie-Applikation 20 dargestellt, die über ein Antriebsmittel 21 verfügt. Das Antriebsmittel 21 ist dazu ausgebildet, eine Antriebsleistung bereitzustellen, die durch eine drehmomentübertragende Verbindung an ein erfindungsgemäßes Getriebe 10 transportiert wird. Das Getriebe 10 ist wiederrum drehmomentübertragend mit einer mechanischen Anwendung 26 verbunden, um eine Abtriebsleistung zur mechanischen Anwendung 26 zu transportieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleitlager (1) mit mindestens einer Gleitfläche (3), die eine Oberflächenrauheit aufweist, **dadurch gekennzeichnet, dass** die Gleitfläche (3) mit einer aus Vertiefungen (7) gebildeten Struktur versehen ist, wobei die Tiefe (t) der Vertiefungen (7) größer als die Oberflächenrauheit und kleiner als 80µm ist und insbesondere im Bereich zwischen 20-50µm liegt.

2. Gleitlager (1) nach Anspruch 1, **dadurch gekennzeichnet, dass** die Vertiefungen (7) auf der Gleitfläche (3) gleichmäßig verteilt angeordnet sind.

3. Gleitlager (1) nach Anspruch 1 oder 2, **dadurch gekennzeichnet, dass** Vertiefungen (7) rillenförmig ausgebildet sind.

4. Gleitlager (1) nach Anspruch 3, **dadurch gekennzeichnet, dass** sich rillenförmig ausgebildete Vertiefungen (7) quer zur Gleitrichtung erstrecken.

5. Gleitlager (1) nach einem der vorhergehenden Ansprüche, **dadurch gekennzeichnet, dass** Vertiefungen (7) napf- und/oder muldenförmig ausgebildet sind.

6. Gleitlager (1) nach Anspruch 5, **dadurch gekennzeichnet, dass** napf- und/oder muldenförmig ausgebildete Vertiefungen (7) im Wesentlichen die Form eines Quaders aufweisen.

7. Gleitlager (1) nach Anspruch 5 oder 6, **dadurch gekennzeichnet, dass** die Ausrichtung napf- und/oder muldenförmig ausgebildete Vertiefungen (7) uneinheitlich ist.

8. Gleitlager (1) nach einem der Ansprüche 5 bis 7, **dadurch gekennzeichnet, dass** napf- und/oder muldenförmig ausgebildete Vertiefungen (7) einen Außenumfang im Bereich von 70-300µm aufweisen.

9. Gleitlager (1) nach einem der vorhergehenden Ansprüche, **dadurch gekennzeichnet, dass** die Vertiefungen (7) einen Flächenanteil von 3-50% der gesamten Gleitfläche (3) aufweisen, insbesondere einen Flächenanteil von 30-50%.

10. Verfahren zur Herstellung eines Gleitlagers (1) nach einem der vorhergehenden Ansprüche, **dadurch gekennzeichnet, dass** die Vertiefungen (7) mittels Wälzprägen, Laserbearbeitung, Sandstrahlen, Kugelstrahlen und/oder Erodieren gefertigt werden.

11. Getriebe (10) mit zumindest einem Gleitlager (1) nach einem der Ansprüche 1 bis 9.

12. Antriebsstrang (18), umfassend eine Rotorwelle (16), die drehmomentübertragend mit einem Getriebe (10) verbunden ist, das wiederrum drehmomentübertragend mit einem Generator (17) verbunden ist, **dadurch gekennzeichnet, dass** das Getriebe (10) nach Anspruch 11 ausgebildet ist.

13. Windkraftanlage (14), umfassend einen Rotor (15), der an einer Gondel (19) angebracht ist, wobei an der Gondel (19) ein Antriebsstrang (18) angeordnet ist, der drehmomentübertragend mit dem Rotor (15) verbunden ist, **dadurch gekennzeichnet, dass** der Antriebsstrang (18) nach Anspruch 12 ausgebildet ist, wobei insbesondere eine Rotorwelle (16) des Antriebsstrangs (18) mit dem zumindest einen Gleitlager (1) gelagert ist.

14. Industrie-Applikation (20), umfassend ein Antriebsmittel (21), das mit einem Getriebe (10) drehmomentübertragend verbunden ist, dass mit einer mechanischen Anwendung (26) drehmomentübertragend gekoppelt ist, **dadurch gekennzeichnet, dass** das Getriebe (10) nach Anspruch 11 ausgebildet ist.
